# FASCICULE DE BREVET EUROPEEN

(11) **EP 1 019 255 B1**
(45) Date de publication et mention de la délivrance du brevet: **16.01.2002**
(21) Numéro de dépôt: 98946526.5
(22) Date de dépôt: 29.09.1998
(51) Int. Cl.: B44C 5/00, B44C 5/06, G05B 19/42, B44C 3/04, B44C 3/06

(54) **PROCEDE DE FABRICATION ET DE REPRODUCTION D'AU MOINS UNE PARTIE D'UN OBJET OU D'UN INDIVIDU**
VERFAHREN ZUR HERSTELLUNG UND REPRODUKTION VON ZUMINDEST EINEM TEIL EINES GEGENSTANDS ODER EINER PERSON
METHOD FOR MAKING AND REPRODUCING AT LEAST PART OF AN OBJECT OR A PERSON

(30) Priorité: 29.09.1997 FR 9712310
(43) Date de publication de la demande: 19.07.2000
(73) Titulaire: UMH Universal Master's Head, 45074 Orléans Cédex 2 (FR)
(72) Inventeur: Hermet, Bernard, 95270 Viarmes (FR); SIMON, Bernard, 95660 Champagne-sur-Oise (FR)
(74) Mandataire: Thivillier, Patrick
(86) Numéro de dépôt international: FR9802085
(87) Numéro de publication internationale: WO9916629

(56) Documents cités:
- EP-A- 0 244 636
- WO-A-83/04114
- WO-A-94/27198
- US-A- 3 988 520
- US-A- 5 280 305
- US-A- 5 363 159

## Description

L'invention se rattache au secteur technique de la reproduction et de la fabrication d'individus, notamment sous forme de bustes et/ou de statuettes.

Il est connu de réaliser des statuettes, des bustes, des figurines caricaturales, des sculptures de différents personnages plus ou moins connus et/ou célèbres dans des milieux divers, aussi bien sportifs que culturels, politiques... La forme du visage et le volume morphologique du personnage à reproduire peuvent être obtenus à partir de photographies, de dessins ou à partir du personnage lui-même. Généralement, les méthodes employées, qui ont un caractère essentiellement artisanal, donnent simplement « l'esprit » du personnage, ses traits caractéristiques, mais ne sauraient en aucun cas constituer une image tridimensionnelle correspondant exactement au personnage, tant au niveau des proportions que des traits.

Autrement dit, les techniques de reproduction en trois dimensions d'un personnage ne permettent pas de restituer une image parfaitement fidèle et authentique du personnage au même titre que peut le faire une photographie dans le cas d'une reproduction en deux dimensions. On observe également que la plupart des statuettes ou des bustes de personnages sont de couleur uniforme. Lorsque l'on souhaite une colorisation, il est nécessaire de faire appel à des procédés entièrement manuels, qui en toute rigueur, ne pourront jamais correspondre à la texture et à la couleur de la peau.

Par l'enseignement du brevet EP-A-0244636, on connaît une solution adaptée à la fabrication de poupées ou d'objets similaires.

De plus le document antérieur fait état de photographies puis de numérisation de ces photographies, en deux opérations indépendantes pour un système d'évaluation des niveaux de gris.

Dans le document US-A-5280305, le but recherché est de faire un masque. Là encore, dans ce brevet antérieur, on ne réalise que la face avant de la tête d'un individu.

L'invention s'est fixée pour but de remédier à ces inconvénients, de manière simple, sûre, efficace et rationnelle.

Le problème que se propose de résoudre l'invention est de réaliser notamment des bustes ou statuettes d'individus en ayant pour objectif de réaliser une reproduction en trois dimensions de ces personnes en respectant l'adéquation de plusieurs paramètres, à savoir essentiellement :
- le volume, qui devra être de la plus grande fidélité possible dans ses proportions et dans ses traits ;
- l'image, qui devra être du plus grand réalisme photographique possible ;
- la couleur, qui devra être authentique ;
- l'esprit, qui devra marquer le caractère et le tempérament du personnage.

Autrement dit, le problème que se propose de résoudre l'invention est de réaliser une reproduction en trois dimensions d'un personnage, notamment de son visage, qui corresponde à son image photographique, au niveau du volume, de la morphologie, de la couleur...

Pour résoudre un tel problème, il a été conçu et mis au point un procédé de fabrication et de reproduction d'au moins une partie d'un individu, ou d'un objet à partir de photographies selon lequel :
- on réalise simultanément un ensemble de mesures afin d'obtenir des données numériques sous forme d'un fichier 3D, d'une texture couleur du fichier 3D et de photographies couleurs en plan 2D de l'individu, ou de l'objet;
- on répète cet ensemble d'acquisition de données sur plusieurs zones prédéfinies, de manière à couvrir les 360° de l'individu ou de l'objet pour plaquer lesdites données sur un volume morphométrique modélisé ;
- on anamorphose l'image obtenue en fonction des caractéristiques physiques de transformation du volume modélisé ;
- on applique l'image anamorphosée sur un support en matière rétractable ;
- on met en forme le support rétractable pour obtenir un manchon ;
- on réalise un corps volumétrique correspondant au modèle numérisé de l'individu ;
- on applique le manchon sur la partie considérée du corps de l'individu ;
- on soumet le manchon à une opération apte à lui permettre d'épouser parfaitement les formes en creux et/ou en relief du corps volumétrique.

D'autres aspects du procédé de fabrication et de reproduction sont définis dans les revendications dépendantes 2 et 3.

Par ailleurs, l'invention concerne également l'application dudit procédé à la réalisation de bustes et/ou de statuettes d'individus, comme définie dans la revendication 4.

L'invention est exposée ci-après plus en détail à l'aide des figures des dessins dans lesquels :

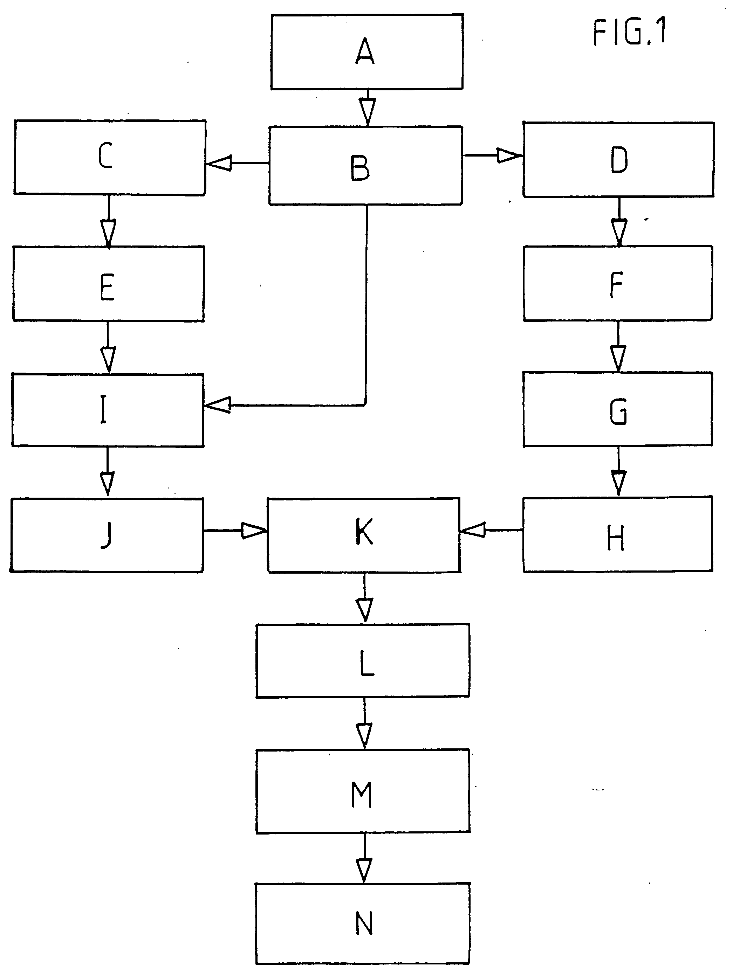

- La figure 1 montre l'algorithme du procédé selon l'invention.

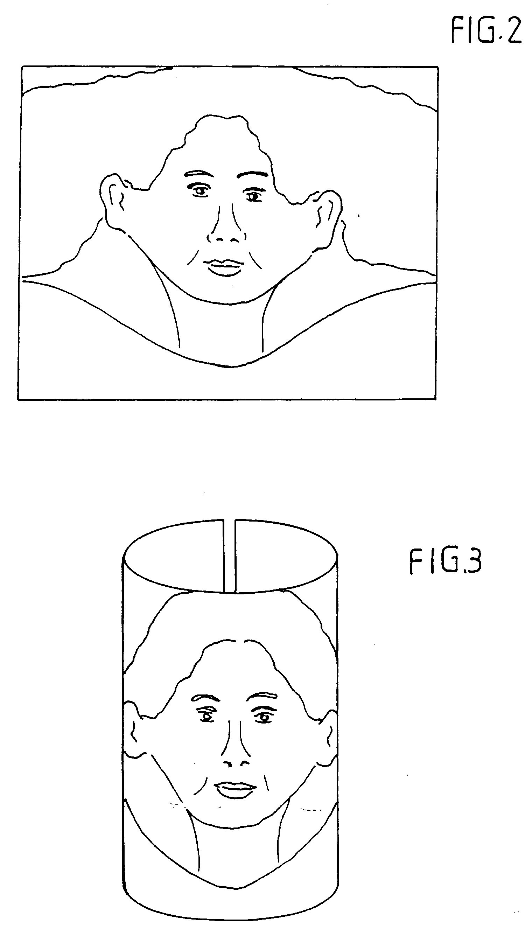

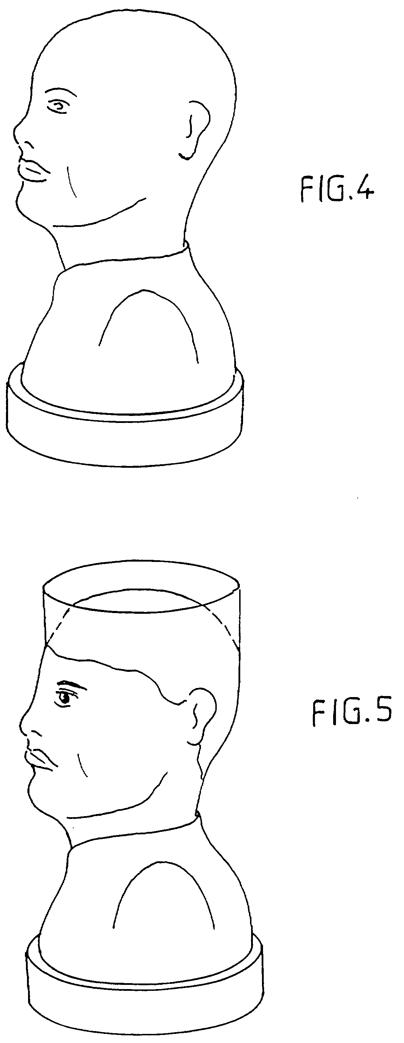

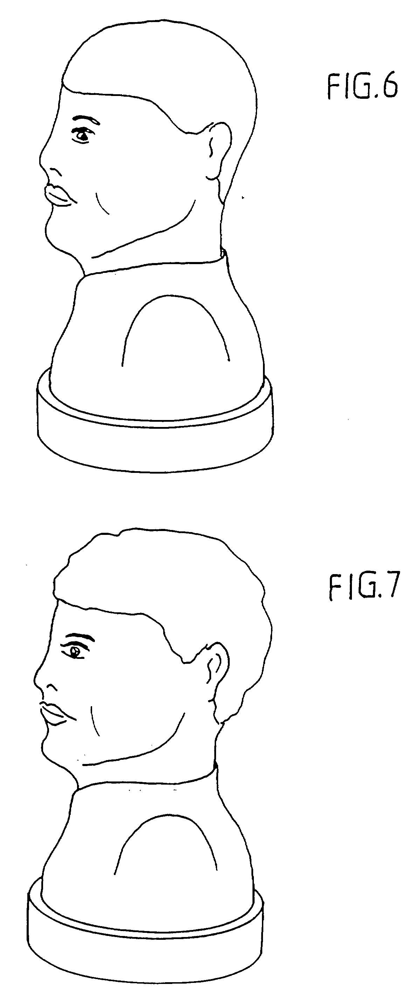

- Les figures 2, 3, 4, 5, 6 et 7 montrent, par des vues à caractère purement schématique, les principales phases de fabrication d'un buste, selon les caractéristiques du procédé de l'invention.

Une des étapes importantes du procédé selon l'invention est l'acquisition des données d'une partie de l'individu que l'on veut reproduire, notamment sa tête, qui bien évidemment constitue la partie caractéristique de chaque individu, partie qui est unique et immédiatement identifiable.

Dans ce but, on réalise des photographies du personnage que l'on veut reproduire en trois dimensions. Généralement, il convient d'effectuer une vue de face, une vue du côté droit, une vue du côté gauche, et éventuellement une vue arrière (étape A).

Il convient ensuite de procéder à une numérisation de ces photographies (étape B), de modéliser un volume morphologique (étape C), et de réaliser une texture peau (étape D) en procédant à une anamorphose, comme il sera indiqué dans la suite de la description. Avantageusement mais non limitativement, deux des éléments essentiels de la reproduction tridimensionnelle afin de correspondre parfaitement à la réalité du personnage, à savoir, son volume morphométrique et la peau, sont déduits des mêmes photographies, de sorte que ces deux éléments sont en parfaite symbiose.

La modélisation du volume (étape E) peut être effectuée selon. plusieurs techniques en fonction de l'acquisition des données.

Dans le cas de personnes disparues, il peut être avantageux de faire appel à la technique de la sculpture pour la fabrication par exemple du buste et de la tête d'après un panel de photographies. Cette sculpture permet de réaliser les empreintes pour la fabrication du moule pour par exemple le scalp, la tête et le buste.

Il est également possible de faire appel à la technique du scanner. Dans ce but, les personnages considérés sont soumis à l'action d'un scanner afin d'obtenir un fichier numérique permettant de réaliser par un centre d'usinage numérique les empreintes pour la fabrication des différents moules nécessaires (scalp, tête, buste par exemple). Enfin, on n'exclut pas de faire appel à un logiciel spécifique afin de numériser les photographies et transmettre directement les informations recueillies à un centre d'usinage afin de fabriquer comme précédemment les moules nécessaires (scalp, tête, buste par exemple). Quelle que soit la technique utilisée, le but recherché de cette étape E est d'obtenir le volume réel de la tête (ou autre), afin d'adapter parfaitement, avec une très grande précision, ce volume avec l'élément texture peau.

Dans ce but, pour la réalisation de la texture peau, on procède informatiquement au photomontage et au mixage des photographies pour obtenir une image développée sur 360° et apte à être plaquée sur le corps volumétrique morphologique. Il convient ensuite, d'une manière particulièrement importante, d'anamorphoser l'image en fonction du volume et des caractéristiques de transformation de la matière peau. Le but recherché est d'obtenir une ressemblance authentique du visage, pour que « la peau » soit mise en volume.

L'image anamorphosée et homotétique (étape F) est ensuite impressionnée sur un support notamment rétractable (étape G). Par exemple, le support est constitué par un film thermorétractable.

Le but recherché est de permettre à travers la déformation de l'image ou de la photo de prédisposer une troisième dimension (profondeur) qui s'exprimera lorsque la peau sera appliquée sur son volume morphologique correspondant.

Ce support rétractable en se rétractant sur un volume déterminé correspondant à l'image ou à la photo épousera les formes de celui-ci et fera se matérialiser la troisième dimension. Ainsi, l'image ou la photo retrouvera son aspect original mais en 3D.

Le support rétractable, ainsi impressionné de l'image anamorphosée, est façonné sous forme d'un manchon (étape H).

Ces différentes étapes caractéristiques du procédé selon l'invention permettent donc d'imprimer sur un support, par exemple, comme indiqué, un film thermo-rétractable, une image anamorphosée d'une photographie préalablement numérisée de la tête du personnage considéré. Ce manchon ainsi traité est ensuite appliqué sur le corps volumétrique morphologique. Ce corps est obtenu, comme déjà indiqué, au moyen de machines de reproduction numérique, qui, de manière parfaitement connue pour un homme du métier, rendent un volume conforme à un fichier numérique tel que visualisé sur un écran informatique (étape E). Bien évidemment à ce stade, le corps volumétrique est de couleur uniforme, notamment blanche. A partir du corps volumétrique obtenu, il est bien évidemment aisé d'en réaliser une matrice (étape I) et d'en obtenir ensuite un nombre important par injection par exemple (étape J). A titre d'exemple indicatif, après exécution d'une maquette tridimensionnelle informatique, on peut fabriquer et mettre au point une électrode pour obtenir des empreintes, en électroérosion d'un outillage d'injection ou par usinage sur un centre numérique sans pour cela exclure d'autres moyens. Les différents volumes peuvent être moulés par injection en polymère par exemple.

Il convient ensuite d'appliquer le support rétractable sous forme d'un manchon, sur lequel a été imprimée l'image anamorphosée du personnage, sur la ou les parties considérées notamment du corps volumétrique. D'une manière particulièrement importante, le film support rétractable est soumis à une opération apte à lui permettre d'épouser parfaitement les formes en creux et en relief du corps volumétrique.

Le manchon étant ainsi engagé sur le corps volumétrique, on procède à une opération de rétraction en combinaison avec une opération dite de symbiage (étape K). Bien évidemment, la pose du manchon peut être effectuée par toute machine automatique appropriée. Il en est de même en ce qui concerne l'opération de rétraction en tant que telle.

Cette opération dite de symbiage a pour effet de conformer le film thermo-rétractable ou autre support sur le corps volumétrique, de telle façon que ce film vienne épouser très précisément les différentes formes du corps volumétrique et plus particulièrement les parties qui apparaissent en creux. Cette opération dite de symbiage a donc pour effet de réétirer la peau dans les zones de dépression (zones en creux) de façon à ce que celle-ci vienne parfaitement se plaquer en tous points à la surface du corps volumétrique. Il en résulte que la peau et le volume sont en parfaite symbiose. Il apparaît donc que cette opération dite de symbiage constitue l'une des étapes caractéristiques du procédé de l'invention. Différentes techniques peuvent être mises en oeuvre pour effectuer cette opération de symbiage. On peut citer par exemple les techniques de mise sous vide, d'aspiration, d'électrostatique . Il suffit ensuite de poser un scalp (étape L) préalablement décoré.

Par exemple, le scalp est fixé par collage ou autrement sur la tête. Il convient ensuite de procéder à des opérations de finition (étape M), notamment afin d'araser les manchons à la base de la tête et dans la partie supérieure du buste. Enfin (étape N), on réalise le conditionnement du buste fini.

Comme indiqué, le procédé selon l'invention trouve une application particulièrement avantageuse pour la réalisation sur un plan industriel des bustes de personnages célèbres notamment, en ayant pour objectif de réaliser une reproduction tridimensionnelle correspondant très exactement aux traits réels et/ou caractéristiques du personnage considéré, aussi bien au niveau du volume que de la peau, afin d'obtenir une espèce de clonage du personnage réel.

La suite de la description résume les phases caractéristiques essentielles pour la réalisation de bustes avec leur scalp correspondant à un personnage quelconque.

On désignera ci-après par buste la figuration de la tête et d'une partie variable de la partie supérieure du corps humain allant de la taille au cou.

### A - TRAVAIL INFORMATIQUE

- Numérisation des photographies sélectionnées du personnage au moyen par exemple d'un scanner ;
- Montage et mixage numérique des photographies pour obtenir une image panoramique à 360° de la peau du visage ;
- Anamorphose et homothétie de l'image peau, au moyen d'un logiciel ;
- Modélisation en 3D virtuelle du personnage, au moyen d'un logiciel.

### B - VOLUME MORPHOLOGIQUE, BUSTE ET SCALP

- Fabrication du modèle morphologique du buste et du scalp sur une machine de reproduction numérique, à partir du fichier modèle 3D ;
- Retouche du ou des modèles morphologiques ;
- Fabrication des moules d'injection à partir du modèle ;
- Injection des volumes morphologiques, du buste et du scalp, au moyen par exemple d'une presse à injecter.

### C - TEXTURE PEAU ET BUSTE

- Impression sur le support rétractable de l'image peau ;
- Impression sur le support rétractable de l'image buste ;
- Fabrication des manchons correspondant à la peau et au buste ;
- Positionnement des manchons sur le volume morphologique de la tête et sur le buste ;
- Rétraction des manchons sur les volumes correspondant de la tête et du buste ;
- Symbiage au niveau de la morphologie de la tête et du buste, pour que le film thermo-rétractable épouse les différentes formes en creux et en relief.

### D - SCALP

- Décoration du scalp, notamment par peinture ;
- Fixation du scalp sur la tête.

### E - SOCLE

- Fabrication du socle.
- Habillage éventuel du socle avec éventuellement l'adjonction d'une signature ou d'une légende...

### F - FINITIONS

- Arasage des manchons à la base de la tête et en partie supérieure du buste ;
- Fixation de la tête par encliquetage, collage, soudure ou autrement sur le buste ;
- Pose du scalp ;
- Pose du socle fini ;
- Mise en place du buste, dans un boîtage cristal par exemple.

Le buste tel que réalisé selon les caractéristiques de l'invention, peut être ensuite conditionné selon différentes méthodes parfaitement connues. De même, quel que soit le conditionnement choisi, ce dernier peut avantageusement être complété par une fiche signalétique du personnage considéré.

La description qui précède s'applique plus particulièrement à la fabrication, à la reproduction d'au moins une partie d'un individu, à savoir essentiellement son buste, sa tête et son scalp. Il est bien entendu que le procédé selon les caractéristiques de l'invention s'applique à la reproduction et à la fabrication non seulement de tout type d'individu, mais également à tout type d'objet en ayant pour objectif de passer de l'état physique d'un corps à des données virtuelles pour en reproduire fidèlement un objet physique au niveau du volume et de la texture aspect de surface. Pour l'essentiel, selon l'invention, à partir d'une image ou photographie en 2D préalablement déformée correspondant à l'opération d'anamorphose, cette dernière est ensuite imprimée sur un support qui constituera la peau. Le support sur lequel est imprimé l'image ou la photographie est sélectionné dans différents matériaux ayant la propriété physique de se rétracter.

La combinaison de l'action de rétraction et de sa limitation volumétrique différentielle sur une forme déterminée associée à l'action dite de symbiage crée une loi algorithmique physique. Cette loi est paramétrable à partir des caractéristiques contrôlées des valeurs du support, des formes du volume morphométrique, des conditions d'application par rétraction et de l'action de symbiage.

Les avantages ressortent bien de la description. En particulier, on souligne et on rappelle que les statuettes, bustes ou figurines issus du procédé, correspondent à une image tridimensionnelle réelle, avec la plus grande fidélité possible, d'authentiques personnages en réduction.

## Revendications

1. Procédé de fabrication et de reproduction d'au moins une partie d'un individu ou d'un objet, à partir de photographies, selon lequel :
- on réalise simultanément un ensemble de mesures afin d'obtenir des données numériques sous forme d'un fichier 3D, d'une texture couleur du fichier 3D et de photographies couleurs en plan 2D de l'individu ou de l'objet;
- on répète cet ensemble d'acquisition de données sur plusieurs zones prédéfinies, de manière à couvrir les 360° de l'individu ou de l'objet pour plaquer lesdites données sur un volume morphométrique modélisé ;
- on anamorphose l'image obtenue en fonction des caractéristiques physiques de transformation du volume modélisé ;
- on applique l'image anamorphosée sur un support en matière rétractable ;
- on met en forme le support rétractable pour obtenir un manchon ;
- on réalise un corps volumétrique correspondant au modèle numérisé de l'individu ou de l'objet ;
- on applique le manchon sur la partie considérée du corps de l'individu ou de l'objet ;
- on soumet le manchon à une opération apte à lui permettre d'épouser parfaitement les formes en creux et/ou en relief du corps volumétrique.

2. Procédé selon la revendication 1, **caractérisé en ce que** les données photographiques numérisées sont appliquées sur le support en matière rétractable par un procédé d'impression photographique.

3. Procédé selon la revendication 1, **caractérisé en ce que** l'on engage le manchon sur le corps volumétrique et l'on procède à une opération de thermo-rétraction en combinaison avec une opération de symbiage.

4. Application du procédé, selon les revendications 1 à 3, à la réalisation de bustes et/ou de statuettes d'individus, à partir de photographies, comprenant les étapes essentielles suivantes :
- Acquisition-numérisation de données 3D et photographiques ;
- Traitement informatique des données 3D et photographies pour obtenir une image panoramique de la peau du visage et le volume virtuel ;
- Anamorphose et homothétie de l'image peau ;
- Modélisation tridimensionnelle virtuelle de l'individu ;
- Fabrication du modèle morphologique de la tête, du buste et du scalp ;
- Fabrication des moules d'injection ;
- Injection des volumes morphologiques de la tête, du buste et du scalp ;
- Impression sur support rétractable de l'image tête ;
- Impression sur support rétractable de l'image buste ;
- Fabrication des manchons, relatifs à la tête et au buste, à partir du support rétractable ;
- Positionnement des manchons sur les volumes morphologiques de la tête et du buste ;
- Rétraction des manchons sur lesdits volumes ;
- Symbiage du support sur les volumes morphologiques de la tête et du buste,
- Décoration du scalp ;
- Collage du scalp sur la tête.

## Patentansprüche

1. Verfahren zur Anfertigung und Wiedergabe mindestens eines Teils einer Person oder eines Gegenstands ausgehend von Fotografien, nach welchem:
- gleichzeitig ein Satz Messungen durchgeführt wird, um digitale Daten in Form einer 3D-Datei, einer Farbstruktur der 3D-Datei und von zweidimensionalen Farbfotografien der Person oder des Gegenstands zu erhalten;
- dieser Datenerfassungssatz über mehrere vorausbestimmte Bereiche wiederholt wird, so dass die Person oder der Gegenstand über 360° abgedeckt werden, um die besagten Daten auf ein modelliertes morphometrisches Volumen zu übertragen;
- das erhaltene Bild in Abhängigkeit von den physikalischen Umformungs-Merkmalen des modellierten Volumens anamorphotisch verzerrt wird;
- das anamorphotisch verzerrte Bild auf einen Träger aus schrumpfbarem Material aufgebracht wird;
- der schrumpfbare Träger in die Form eines Zylindermantels gebracht wird;
- ein volumetrischer Körper entsprechend dem digitalisierten Modell der Person oder des Gegenstands angefertigt wird;
- der Zylindermantel auf den betroffenen Teil des Körpers der Person oder des Gegenstands aufgebracht wird;
- der Zylindermantel einem Arbeitsgang unterzogen wird, welcher ihm erlaubt, sich den vertieften und/oder erhabenen Formen des volumetrischen Körpers genau anzupassen.

2. Verfahren nach Anspruch 1, **dadurch gekennzeichnet, dass** die digitalisierten fotografischen Daten durch ein fotografisches Druckverfahren auf den Träger aus schrumpfbarem Material aufgebracht werden.

3. Verfahren nach Anspruch 1, **dadurch gekennzeichnet, dass** der Zylindermantel auf den volumetrischen Körper aufgeschoben wird und dass eine Wärmeschrumpfung in Verbindung mit einer genauen Anpassung durchgeführt wird.

4. Anwendung des Verfahrens nach den Ansprüchen 1 bis 3 auf die Anfertigung von Büsten und/oder Figuren von Personen ausgehend von Fotografien, mit folgenden wesentlichen Schritten:
- Erfassung - Digitalisierung von 3D-Daten und fotografischen Daten;
- Elektronische Verarbeitung der. 3D-Daten und der Fotografien, um ein Panorama-Bild der Gesichtshaut und das virtuelle Volumen zu erhalten;
- Anamorphose und Homothetie des Hautbildes;
- Virtuelle dreidimensionale Modellierung der Person;
- Anfertigung des morphologischen Modells des Kopfs, der Büste und des Skalps;
- Anfertigung der Spritzgussformen;
- Spritzguss der morphologischen Volumen des Kopfs, der Büste und des Skalps;
- Drucken des Kopfbilds auf einen schrumpfbaren Träger;
- Drucken des Büstenbilds auf einen schrumpfbaren Träger;
- Anfertigen der Zylindermäntel für den Kopf und für die Büste aus dem schrumpfbaren Träger;
- Positionierung der Zylindermäntel auf den morphologischen Volumen von Kopf und Büste;
- Aufschrumpfen der Zylindermäntel auf die besagten Volumen;
- Genaue Anpassung des Trägers an das morphologische Volumen von Kopf und Büste;
- Dekoration des Skalps;
- Aufkleben des Skalps auf den Kopf.

## Claims

1. Method for manufacturing and reproducing at least part of an individual or of an object from photographs, whereby:
- a set of measurements is produced simultaneously, in order to obtain numerical data in the form of a 3D file, of a colour texture of the 3D file and of 2D plane colour photographs of the individual or of the object;
- this data acquisition set is repeated over a plurality of predefined zones, so as to cover the 360° of the individual or of the object, in order to lay the said data onto a modelled morphometric volume;
- the image obtained is anamorphosed as a function of the physical transformation characteristics of the modelled volume;
- the anamorphosed image is applied to a support made of shrinkable material;
- the shrinkable support is shaped in order to obtain a sleeve;
- a volumetric body corresponding to the digitized model of the individual or of the object is produced;
- the sleeve is applied to the relevant part of the body of the individual or of the object;
- the sleeve is subjected to an operation capable of allowing it to match perfectly the recessed and/or relief shapes of the volumetric body.

2. Method according to Claim 1, **characterized in that** the digitized photographic data are applied to the support made of shrinkable material by means of a photographic printing method.

3. Method according to Claim 1, **characterized in that** the sleeve is engaged on the volumetric body and a heat-shrinkage operation is carried out in combination with a symbiosing operation.

4. Use of the method according to Claims 1 to 3 in the production of busts and/or statuettes of individuals, from photographs, comprising the following essential steps:
- Acquisition and digitization of 3D and photographic data;
- Computerized processing of the 3D data and photographs in order to obtain a panned image of the skin of the face and the virtual volume;
- Anamorphosis and homothetics of the skin image;
- Virtual three-dimensional modelling of the individual;
- Manufacture of the morphological model of the head, bust and scalp;
- Manufacture of the injection moulds;
- Injection-moulding of the morphological volumes of the head, bust and scalp;
- Printing of the head image onto the shrinkable support;
- Printing of the bust image onto the shrinkable support;
- Manufacture of the sleeves relating to the head and to the bust from the shrinkable support;
- Positioning of the sleeves on the morphological volumes of the head and of the bust;
- Shrinkage of the sleeves onto the said volumes;
- Symbiosing of the support on the morphological volumes of the head and of the bust;
- Decoration of the scalp;
- Adhesive bonding of the scalp to the head.
